# DEMANDE DE BREVET EUROPEEN

(11) **EP 4 242 141 A1**
(43) Date de publication de la demande: **13.09.2023**
(21) Numéro de dépôt: 23160652.6
(22) Date de dépôt: 08.03.2023
(51) Int. Cl.: B65G 47/54

(54) **DISPOSITIF TRANSFERT A CONVOYEURS TRANSVERSAUX IMBRIQUES**

(30) Priorité: 10.03.2022 FR 2202117
(71) Demandeur: HOLDING FINANCIERE CIUCH En abrégé "H.F.C.", 59200 Tourcoing (FR)
(72) Inventeur: MASSE, Hugo, 59000 Lille (FR); CIUCH, Francis, 59890 Quesnoy sur Deule (FR)
(74) Mandataire: Matkowska, Franck

(57) **Abrégé**

Le dispositif transfert (T) comporte un premier convoyeur (1) et un deuxième convoyeur (2) qui sont transversaux et imbriqués et un système monte et baisse (3) qui permet de lever et abaisser au moins ledit deuxième convoyeur (2) entre une position haute et une position basse, de manière à permettre un transfert entre les deux convoyeurs (1 ; 2) avec un changement de la direction de convoyage. Le système monte et baisse (3) comporte au moins une colonne (30) réglable, qui est positionnée sous et supporte ledit deuxième convoyeur (2) et qui comporte une came (3021) et un suiveur de came (303). La came comprend un chemin de came (3022) centré sur cet axe de rotation vertical (A), et le suiveur de came (303) est adapté pour coopérer avec ledit chemin de came (3022), de sorte que la rotation de la came (3021) autour de cet axe de rotation vertical (A) permet ledit mouvement monte et baisse du deuxième convoyeur (2). Le système monte et baisse (3) comporte un actionneur (31) permettant d'actionner en rotation la came (3021) autour de cet axe de rotation vertical (A).

## Description

### Domaine technique

La présente invention concerne le convoyage de charges, en particulier, mais pas exclusivement, de charges lourdes de type palettes. Dans ce domaine, elle concerne plus particulièrement un dispositif transfert à convoyeurs transversaux imbriqués, permettant un transfert d'un convoyeur à l'autre avec un changement de la direction de convoyage, et plus particulièrement avec un changement de direction à 90°.

### Art antérieur

Dans le domaine de la transitique, il est connu d'utiliser des dispositifs transfert automatisés dans une ligne de convoyage du type comportant des convoyeurs à rouleaux, à galets, à chaînes ou à courroie, et qui permettent de changer la direction de convoyage d'une charge transportée, par exemple pour l'aiguiller latéralement sur une autre voie de convoyage ou pour l'éjecter latéralement d'une voie de convoyage.

Un type connu de dispositif transfert comprend deux convoyeurs transversaux « *imbriqués »,* par exemple un premier convoyeur à rouleaux et un deuxième convoyeur à chaînes, dont les chaînes sont intercalées entre les rouleaux.

Le premier convoyeur forme une première surface de convoyage et permet de supporter et transporter une charge dans une première direction de convoyage. Le deuxième convoyeur forme une deuxième surface de convoyage et permet de supporter et transporter une charge dans une deuxième direction de convoyage, transversal à la première direction de convoyage, et plus particulièrement perpendiculaire à la première direction de convoyage. Au moins l'un des deux convoyeurs est mobile verticalement, et le dispositif transfert comporte un système monte et baisse, qui permet de lever et abaisser au moins ce convoyeur mobile entre au moins deux positions basse et haute, de manière à permettre un transfert entre les deux convoyeurs transversaux imbriqués avec un changement de la direction de convoyage.

Une première solution technique pour obtenir ledit mouvement monte et baisse consiste à mettre en oeuvre des vérins de levage. Cette solution technique est décrite par exemple dans les brevets américains US 3,921,789 et US 5,868,238.

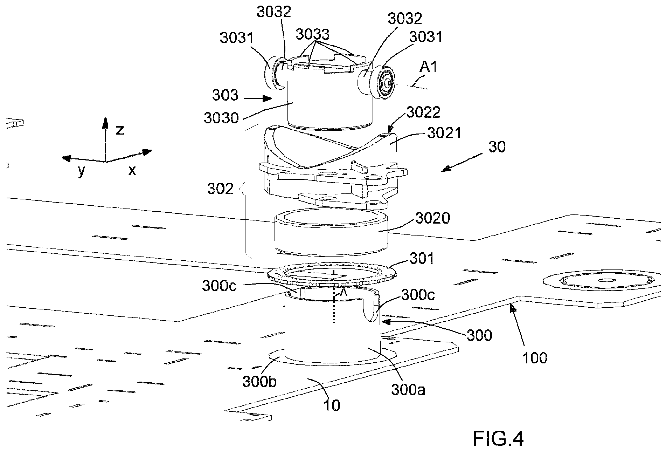

Une deuxième solution technique décrite dans le brevet américain, US 10,351,353 pour obtenir ledit mouvement monte et baisse consiste à mettre en oeuvre une plateforme qui est fixée sous le châssis du convoyeur en étant supportée sur des piliers de manière à pouvoir coulisser verticalement. Ce système monte et baisse comporte une came (Figure 4A) à axe de rotation horizontale, qui est entraînée en rotation par un moteur et qui coopère avec la plateforme pour faire monter ou descendre ladite plateforme, et par là-même le convoyeur supporté par cette plateforme.

Ces solutions techniques présentent toutefois l'inconvénient d'être très encombrantes en hauteur. En outre, elles ne permettent pas un positionnement des deux convoyeurs au plus près du sol, ce qui conduit à mettre en oeuvre des surfaces de transport qui sont nécessairement surélevées de manière importante par rapport au sol et oblige de manière préjudiciable à lever sur une hauteur importante les charges à transporter, pour les positionner sur le dispositif de transfert ou sur un convoyeur positionné en amont ou aval du dispositif de transfert. En particulier, avec les dispositifs de transfert décrits dans les publications susvisées, il n'est pas possible par exemple de charger des palettes à transporter sur l'un des convoyeurs du dispositif de transfert ou sur un convoyeur positionné en amont ou aval du dispositif de transfert, au moyen d'un simple transpalette manuel à faible course de levage.

Une troisième solution technique consiste à obtenir ledit mouvement monte et baisse au moyen d'un système à cames, en mettant en oeuvre un arbre motorisé à axe de rotation horizontal, pourvu à chacune de ses deux extrémités d'au moins une came en contact avec le convoyeur. Cette troisième solution est décrite par exemple dans les publications suivantes : WO2014/152614, WO2020/124027, WO2014/15261, US10882703 et JP2014152024.

Cette troisième solution présente l'intérêt d'être plus compacte que la première solution susvisée, mais ne permet pas d'obtenir une force de levage importante. Elle n'est donc pas adaptée au convoyage de charges lourdes, par exemple de palettes.

### Objectif de l'invention

L'invention propose une nouvelle solution de dispositif transfert à convoyeurs transversaux imbriqués, qui présente l'avantage d'être compacte en hauteur et de permettre en cas de nécessité un positionnement près du sol des surfaces de transport des convoyeurs du dispositif transfert, tout étant robuste et en permettant d'obtenir une force de levage importante, ce qui rend notamment la solution de l'invention adaptée au transfert de charges pouvant être lourdes, par exemple, mais pas exclusivement, au transfert avec changement de direction de palettes dans une installation de convoyage.

### Résumé de l'invention

L'invention a ainsi pour objet un dispositif transfert comportant un premier convoyeur et un deuxième convoyeur qui sont transversaux et imbriqués, au moins le deuxième convoyeur étant mobile verticalement, et un système monte et baisse qui permet de lever et abaisser au moins ledit deuxième convoyeur entre une position haute et une position basse, de manière à permettre un transfert entre les deux convoyeurs avec un changement de la direction de convoyage.

De manière caractéristique selon l'invention, le système monte et baisse comporte au moins une colonne réglable, qui est positionnée sous et supporte ledit deuxième convoyeur et qui comporte une came et un suiveur de came, la came ou le suiveur de came étant rotatif autour d'un axe de rotation vertical, la came comprenant un chemin de came centré sur cet axe de rotation vertical, et le suiveur de came étant adapté pour coopérer avec ledit chemin de came, de sorte que la rotation de la came ou du suiveur de came autour de cet axe de rotation vertical permet ledit mouvement monte et baisse du deuxième convoyeur ; le système monte et baisse comporte un actionneur permettant d'actionner en rotation la came ou le suiveur de came autour de cet axe de rotation vertical.

De manière facultative, le dispositif transfert peut également comporter la ou les caractéristiques techniques optionnelles ci-après, prises isolément ou en combinaison l'une avec l'autre :
- Le système monte et baisse comporte plusieurs colonnes réglables, qui sont positionnées sous et supportent ledit deuxième convoyeur et qui comportent chacune une came et un suiveur de came , chaque came ou suiveur de came étant rotatif autour d'un axe de rotation vertical, chaque came comprenant un chemin de came centré sur cet axe de rotation vertical, et chaque suiveur de came étant adapté pour coopérer avec ledit chemin de came, de sorte que la rotation des cames ou des suiveurs de came autour de leur axe de rotation vertical permet ledit mouvement monte et baisse du convoyeur mobile verticalement, et ledit actionneur du système monte et baisse permet d'actionner simultanément en rotation les cames ou les suiveurs de came de toutes les colonnes réglables autour de leur axe de rotation vertical.
- Le premier convoyeur et le deuxième convoyeur sont perpendiculaires et permettent un transfert à 90°.
- Le nombre de colonnes réglables est d'au moins trois et de préférence d'au moins quatre.
- Chaque colonne réglable est positionnée au sommet d'un polygone.
- le premier convoyeur et le deuxième convoyeur sont agencés l'un par rapport à l'autre de telle sorte que le deuxième convoyeur occupe le même espace en hauteur que le premier convoyeur lorsque le deuxième convoyeur est en position basse.
- Le premier convoyeur comporte un châssis, sur lequel sont montés des premiers éléments de convoyage qui sont mobiles et forment une première surface de convoyage permettant de supporter et transporter une charge dans une première direction de convoyage (X) et le deuxième convoyeur comporte un châssis, sur lequel sont montés des deuxièmes éléments de convoyage qui sont mobiles et forment une deuxième surface de convoyage permettant de supporter et transporter une charge dans une deuxième direction de convoyage (Y) transversale, et de préférence perpendiculaire, à la première direction de convoyage ; les premiers éléments de convoyage et les deuxièmes éléments de convoyage sont imbriqués.
- Le châssis du deuxième convoyeur est emboîté avec le châssis du premier convoyeur, de préférence de telle sorte que les deux convoyeurs occupent le même espace en hauteur lorsque le deuxième convoyeur est en position basse.
- Le châssis du premier convoyeur comporte une face inférieure, de préférence plane, qui constitue la base du châssis du premier convoyeur et le châssis du deuxième convoyeur est positionné au-dessus de cette base.
- Chaque colonne réglable est positionnée au-dessus de la base du châssis du premier convoyeur.
- Le système monte et baisse est intégralement positionné au-dessus de la base du châssis du premier convoyeur.
- Le châssis du premier convoyeur est adapté pour être posé en contact avec le sol.
- Chaque colonne réglable est montée entre le châssis du premier convoyeur et le châssis du deuxième convoyeur et fait office d'entretoise réglable permettant le réglage de l'écartement en hauteur entre les deux châssis.
- Les premiers éléments de convoyage comportent un ensemble de rouleaux et les deuxièmes éléments de convoyage comportent un ensemble de chaînes intercalées entre les rouleaux.
- Les deuxièmes éléments de convoyage comportent un ensemble de rouleaux et les premiers éléments de convoyage comportent un ensemble de chaînes intercalées entre les rouleaux.
- La hauteur (H) entre la base du châssis du premier convoyeur et la première surface de convoyage est de 90mm +/-10mm.
- Chaque came est mobile en rotation autour de son axe central vertical et le suiveur de came est bloqué en rotation autour de cet axe et est mobile en translation vers le haut et vers le bas.
- Chaque colonne réglable comporte un tube de guidage fixe, qui définit l'axe de rotation vertical de la came ; la came est enfilée sur le tube de guidage de sorte que le tube de guidage permet de guider en rotation la came autour de cet axe, et le suiveur de came est inséré dans le tube de guidage en étant en contact avec le chemin de came ou est enfilé sur le tube de guidage en étant contact avec le chemin de came, de telle sorte que le suiveur de came est bloqué en rotation autour de cet axe par le tube de guidage et est mobile et est guidé en translation vers le haut et vers le bas par le tube de guidage.
- Le tube de guidage est fixé sur premier convoyeur.
- Le tube de guidage comporte deux encoches de guidage axial, qui sont diamétralement opposées et symétriques l'une de l'autre par rapport à l'axe de rotation de la came et qui permettent ledit blocage en rotation de suiveur de came et ledit guidage en translation vers le haut et vers le bas du suiveur de came.
- Le dispositif transfert comporte une buse de lubrification adaptée pour introduire un lubrifiant entre le suiveur de came et le tube de guidage.
- La buse de lubrification est fixée au suiveur de came, comporte une admission pour le lubrifiant qui est positionnée à l'intérieur du suiveur de came, et débouche dans l'espace entre le suiveur de came et le tube de guidage.
- Le châssis du deuxième convoyeur comporte une ouverture traversante permettant d'accéder à l'admission de la buse de lubrification, et plus particulièrement permettant de faire passer et de connecter une tubulure d'alimentation en lubrifiant à l'admission de la buse de lubrification.
- Chaque colonne réglable comporte un roulement en forme de couronne, et plus particulièrement un roulement à rouleaux de type butée à aiguilles, qui est enfilé sur le tube de guidage et permet une liaison roulante en rotation entre la came rotative et le support sur lequel est fixé le tube de guidage, et de préférence entre la came rotative et le châssis du premier convoyeur.
- Le châssis du deuxième convoyeur est posé et emboîté, de préférence de manière amovible, sur le suiveur de came de chaque colonne réglable.
- Le chemin de came est symétrique par rapport à l'axe central de rotation de la came ou du suiveur de came.
- Le suiveur de came comporte au moins un galet suiveur en contact roulant avec le chemin de came.
- Le suiveur de came comporte deux galets suiveurs qui sont en contact roulant avec le chemin de came, et qui sont diamétralement opposés et symétriques l'un de l'autre par rapport à l'axe central de rotation de la came ou suiveur de came.
- L'actionneur du système monte et baisse comporte un moteur, dont l'arbre moteur est couplé en rotation à au moins une colonne réglable au moyen d'une liaison bielle-manivelle, le moteur étant de préférence monté sur le premier convoyeur.
- Le dispositif transfert comporte plusieurs colonnes réglables et chaque colonne réglable est couplée en rotation à une autre colonne réglable au moyen d'une liaison bielle-manivelle.
- Le système monte et baisse est adapté pour supporter et soulever une charge qui est posée sur le deuxième convoyeur et dont le poids peut atteindre au moins 1000 kg.

L'invention a pour autre objet une installation de convoyage comportant au moins une ligne de convoyage qui comporte au moins un dispositif transfert susvisé, intercalé entre deux convoyeurs additionnels alignés avec le premier convoyeur du dispositif transfert et/ou au moins une ligne de convoyage qui comporte au moins un dispositif transfert susvisé, intercalé entre deux convoyeurs additionnels qui sont alignés avec le deuxième convoyeur du dispositif transfert en position haute.

Dans une variante particulière de réalisation, l'installation de convoyage comporte une première et une deuxième ligne de convoyage transversales, et de préférence perpendiculaires, et le dispositif transfert est intercalé entre les deux convoyeurs additionnels de la première ligne de convoyage et entre les deux convoyeurs (additionnels de la deuxième ligne de convoyage).

L'invention a également pour objet une utilisation du dispositif transfert susvisé dans une installation de convoyage pour transférer dans une deuxième direction de convoyage transversale une charge, et plus particulièrement une palette, qui est transportée dans l'installation de convoyage dans une première direction de convoyage jusqu'au dispositif transfert ou pour éjecter latéralement une charge, et plus particulièrement une palette, qui est transportée dans l'installation de convoyage dans une première direction de convoyage jusqu'au dispositif transfert.

Selon un autre aspect, l'invention a également pour objet un nouveau système monte et baisse.

De manière connue, ce système monte et baisse comporte au moins une colonne réglable qui comprend une came et un suiveur de came, la came étant rotative autour d'un axe de rotation vertical, la came comprenant un chemin de came centré sur cet axe de rotation vertical, et le suiveur de came étant adapté pour coopérer avec ledit chemin de came, de sorte que la rotation de la came autour de cet axe de rotation vertical permet un mouvement monte et baisse du suiveur de came.

De manière caractéristique selon l'invention, ladite au moins une colonne réglable comporte un tube de guidage, qui définit l'axe de rotation vertical de la came ; la came est enfilée sur le tube de guidage de sorte que le tube de guidage permet de guider en rotation la came autour de cet axe, et le suiveur de came est inséré dans le tube de guidage en étant en contact avec le chemin de came ou est enfilé sur le tube de guidage en étant contact avec le chemin de came, de telle sorte que le suiveur de came est bloqué en rotation autour de cet axe par le tube de guidage et est mobile et guidé en translation vers le haut et vers le bas par le tube de guidage.

De manière facultative, le système monte et baisse peut également comporter la ou les caractéristiques techniques additionnelles ci-après, chaque caractéristique additionnelle pouvant le cas échéant être combinée avec l'une quelconque des autres caractéristiques techniques additionnelles :
- Le système monte et baisse comporte un actionneur permettant d'actionner en rotation ladite au moins une came autour de cet axe de rotation vertical.
- Le système monte et baisse comporte plusieurs colonnes réglables, qui comportent chacune une came et un suiveur de came, chaque came étant rotative autour d'un axe de rotation vertical, chaque came comprenant un chemin de came centré sur cet axe de rotation vertical, et chaque suiveur de came étant adapté pour coopérer avec ledit chemin de came, de sorte que la rotation des cames autour de leur axe de rotation vertical permet ledit mouvement monte et baisse des suiveurs de came ; chaque colonne réglable comporte un tube de guidage fixe, qui définit l'axe de rotation vertical de la came ; la came est enfilée sur le tube de guidage de sorte que le tube de guidage permet de guider en rotation la came autour de cet axe, et le suiveur de came est inséré dans le tube de guidage en étant en contact avec le chemin de came ou est enfilé sur le tube de guidage en étant contact avec le chemin de came, de telle sorte que le suiveur de came est bloqué en rotation autour de cet axe par le tube de guidage et est mobile et est guidé en translation vers le haut et vers le bas par le tube de guidage.

- Le système monte et baisse comporte un actionneur permettant d'actionner simultanément en rotation les cames de toutes les colonnes réglables autour de leur axe de rotation vertical.
- Le nombre de colonnes réglables est d'au moins trois et de préférence d'au moins quatre.
- Chaque colonne réglable est positionnée au sommet d'un polygone.
- Le tube de guidage ou chaque tube de guidage comporte deux encoches de guidage axial, qui sont diamétralement opposées et symétriques l'une de l'autre par rapport à l'axe de rotation de la came et qui permettent ledit blocage en rotation de suiveur de came et ledit guidage en translation vers le haut et vers le bas du suiveur de came.
- Le système monte et baisse comporte une buse de lubrification adaptée pour introduire un lubrifiant entre le suiveur de came et le tube de guidage.
- La buse de lubrification est fixée au suiveur de came, comporte une admission pour le lubrifiant qui est positionnée à l'intérieur du suiveur de came, et débouche dans l'espace entre le suiveur de came et le tube de guidage.
- Chaque colonne réglable comporte un roulement en forme de couronne, et plus particulièrement un roulement à rouleaux de type butée à aiguilles, qui est enfilé sur le tube de guidage et permet une liaison roulante en rotation entre la came rotative et le support sur lequel le tube de guidage est destiné à être fixé.
- Le chemin de came est symétrique par rapport à l'axe central de rotation de la came.
- Le suiveur de came comporte au moins un galet suiveur en contact roulant avec le chemin de came.
- Le suiveur de came comporte deux galets suiveurs qui sont en contact roulant avec le chemin de came, et qui sont diamétralement opposés et symétriques l'un de l'autre par rapport à l'axe central de rotation de la came.
- L'actionneur du système monte et baisse comporte un moteur, dont l'arbre moteur est couplé en rotation à au moins une colonne réglable au moyen d'une liaison bielle-manivelle.
- Le système monte et baisse comporte plusieurs colonnes réglables et chaque colonne réglable est couplée en rotation à une autre colonne réglable au moyen d'une liaison bielle-manivelle.
- Le système monte et baisse est adapté pour soulever une charge dont le poids peut atteindre au moins 1000 kg.

Selon cet autre aspect, l'invention a également pour objet un ensemble comportant un support et un système monte et baisse susvisé qui supporte ledit support et permet de lever ou d'abaisser ledit support.

De manière facultative, ledit ensemble (support/ système monte et baisse) peut également comporter la ou les caractéristiques techniques additionnelles ci-après, chaque caractéristique additionnelle pouvant le cas échéant être combinée avec l'une quelconque des autres caractéristiques techniques additionnelles :
- Le support est une plateforme ou un plateau.
- Le support est un convoyeur.
- Ledit convoyeur comporte un châssis, sur lequel sont montés des éléments de convoyage qui sont mobiles et forment une surface de convoyage permettant de supporter et transporter une charge dans une première direction de convoyage.
- Les éléments de convoyage comportent un ensemble de rouleaux.
- Les éléments de convoyage comportent un ensemble de chaînes.
- Le châssis du convoyeur comporte, pour ladite au moins une colonne réglable ou pour chaque colonne réglable, une ouverture traversante permettant d'accéder à l'admission de la buse de lubrification, et plus particulièrement permettant de faire passer et de raccorder une tubulure d'alimentation en lubrifiant à l'admission de la buse de lubrification.
- Le support, et plus particulièrement le châssis du convoyeur, est fixé, de préférence de manière démontable, au suiveur de came de ladite au moins une colonne réglable ou de chaque colonne réglable.
- Le support, et plus particulièrement le châssis du convoyeur, est monté de manière amovible sur le suiveur de came de ladite au moins une colonne réglable ou de chaque colonne réglable.
- Le support, et plus particulièrement le châssis du convoyeur, est posé et emboîté, de préférence de manière amovible, sur le suiveur de came de ladite au moins une colonne réglable ou de chaque colonne réglable.

### Brève description des dessins

Les caractéristiques et avantages de l'invention apparaîtront plus clairement à la lecture de la description détaillée ci-après d'une variante préférée de réalisation de l'invention, laquelle description est donnée à titre d'exemple non limitatif et non exhaustif de l'invention, et en référence aux dessins annexés sur lesquels :
- La figure 1 est une vue éclatée en perspective isométrique d'une variante préférée de réalisation d'un dispositif transfert de type rouleaux/chaînes conforme à l'invention.
- La figure 2 est une perspective isométrique du dispositif transfert assemblé de la figure 1, le convoyeur à chaînes étant en position basse.
- La figure 3 est une perspective isométrique du dispositif transfert assemblé de la figure 1, le convoyeur à chaînes étant en position haute.
- La figure 4 est une vue éclatée d'une colonne réglable du dispositif transfert des figures 1 à 3.
- La figure 5 est une vue isométrique d'une colonne réglable du dispositif transfert des figures 1 à 3, lorsque le suiveur de came est en position basse.
- La figure 6 est une vue isométrique d'une colonne réglable du dispositif transfert des figures 1 à 3, lorsque le suiveur de came est en position intermédiaire entre la position basse et la position haute.
- La figure 7 est une vue isométrique d'une colonne réglable du dispositif transfert des figures 1 à 3, lorsque le suiveur de came est en position haute.
- La figure 8 est une vue de dessus du châssis du convoyeur à rouleaux (les rouleaux étant retirés), montrant l'actionneur (de type moteur/ensemble de liaisons bielle-manivelle) des colonnes réglables, dans une configuration correspondant à la position haute des colonnes réglables.
- La figure 9 est une vue de dessus du châssis du convoyeur à rouleaux (les rouleaux étant retirés), montrant l'actionneur (de type moteur/ensemble de liaisons bielle-manivelle) des colonnes réglables, dans une configuration correspondant à une position intermédiaire entre les positions haute et basse des colonnes réglables, au cours d'un mouvement d'abaissement en direction de la position basse.
- La figure 10 est une vue de dessus du châssis du convoyeur à rouleaux (les rouleaux étant retirés), montrant l'actionneur (de type moteur/ensemble de liaisons bielle-manivelle) des colonnes réglables, dans une configuration correspondant à la position basse des colonnes réglables.
- La figure 11 est une vue de dessus du châssis du convoyeur à rouleaux (les rouleaux étant retirés), montrant l'actionneur (de type moteur/ensemble de liaisons bielle-manivelle) des colonnes réglables, dans une configuration correspondant à une position intermédiaire entre les positions basse et haute des colonnes réglables, au cours d'un mouvement de montée en direction de la position haute.
- La figure 12 est une vue de dessus d'une installation de convoyage à quatre voies perpendiculaires dans laquelle est intégré le dispositif transfert des figures 1 à 3.
- La figure 13 est une vue isométrique d'un exemple de palette standard pouvant être transportée dans l'installation de convoyage de la figure 12.
- La figure 14 est une vue en perspective isométrique d'une variante de réalisation d'une colonne réglable comportant une buse de lubrification.
- La figure 15 est une vue en perspective isométrique partielle du châssis du premier convoyeur montrant l'ouverture d'accès à la buse de lubrification et une tubulure d'alimentation en lubrifiant.

### Description détaillée

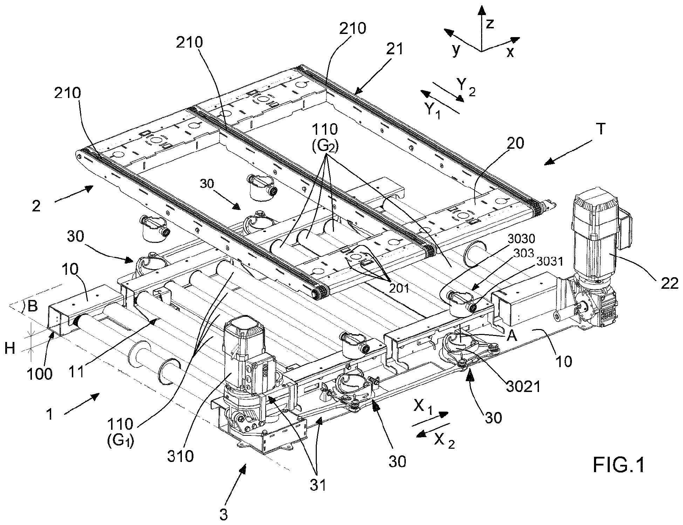

En référence aux figures 1 à 3, le dispositif transfert T comporte deux convoyeurs 1 et 2, qui sont transversaux et imbriqués.

Dans cette variante particulière de réalisation, le premier convoyeur 1 est fixe et le deuxième convoyeur 2 est mobile verticalement.

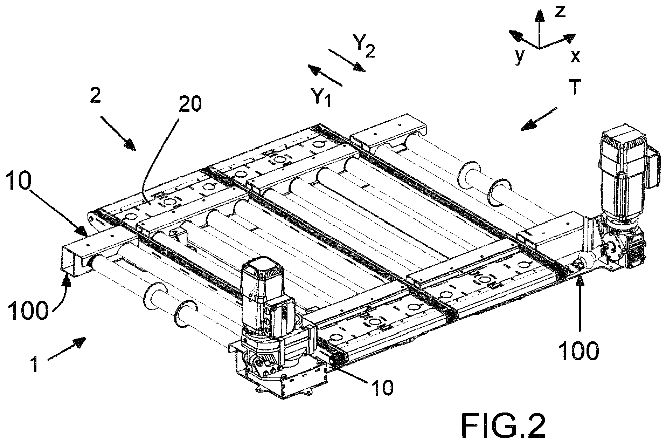

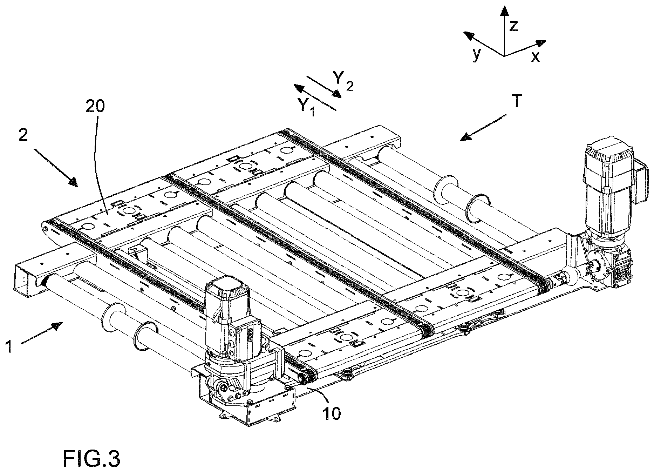

Le dispositif transfert T comporte un système monte et baisse 3, qui permet de déplacer verticalement le deuxième convoyeur 2 par rapport au premier convoyeur 1 entre au moins une position basse (Figure 2) et une position haute (Figure 3), de manière à permettre un transfert entre les deux convoyeurs 1 et 2 avec un changement de la direction de convoyage.

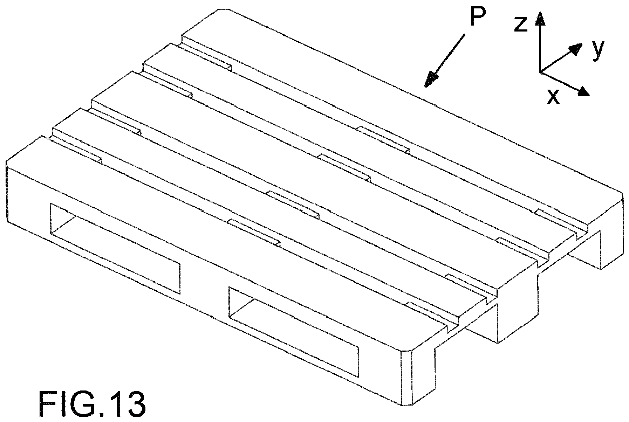

Ce dispositif de transfert T est plus particulièrement adapté pour transférer, avec un changement de la direction de convoyage, une palette du type de la palette standard P de la figure 13, ladite palette P pouvant être vide, tel qu'illustré sur la figure 13, ou pouvant être chargée de produits. L'invention n'est toutefois pas limitée à un transfert de palettes vides ou chargées, mais un dispositif transfert de l'invention peut être utilisé pour transférer tout type de charge dans une ligne de convoyage, avec un changement de la direction de convoyage. La charge peut par exemple être un bac ou container rigide, vide ou rempli, un carton vide ou rempli, un colis,...

### Exemples de convoyeurs 1 et 2

Le premier convoyeur 1 comporte un châssis 10 mécano-soudé sur lequel sont montés des premiers éléments de convoyage 11 qui sont mobiles et forment une première surface de convoyage permettant de supporter et transporter une palette P, dans une première direction de convoyage X, dans un sens de convoyage X1 ou dans le sens de convoyage opposé X2.

Dans cet exemple particulier, ces premiers éléments de convoyage 11 mobiles comportent un ensemble de rouleaux 110 motorisés et espacés, dont les axes de rotation sont parallèles. Ces rouleaux 110 sont alignés verticalement (axe Z) de manière à former ladite première surface de convoyage, qui est horizontale.

Plus particulièrement, dans l'exemple illustré, l'ensemble de rouleaux 110 est constitué de deux groupes G1 et G2 de plusieurs rouleaux. De manière usuelle, l'un des rouleaux 110 de chaque groupe G1 ou G2 comporte un moteur interne pour son entraînement en rotation dans un sens ou dans l'autre et est couplé aux autres rouleaux 110 par une courroie de transmission permettant l'entraînement en rotation des autres rouleaux du groupe.

Le deuxième convoyeur 2 comporte un châssis 20 mécano-soudé sur lequel sont montés des deuxièmes éléments de convoyage 21 qui sont mobiles et forment une deuxième surface de convoyage horizontale, permettant de supporter et transporter une palette P, dans une deuxième direction de convoyage Y, dans un sens de convoyage Y1 ou dans le sens de convoyage opposé Y2.

Cette deuxième direction de convoyage Y est orientée transversalement à la première direction de convoyage X, et plus particulièrement, dans cet exemple préféré, est perpendiculaire à la première direction de convoyage X.

Dans cet exemple particulier, ces deuxièmes éléments de convoyage 21 comportent un ensemble de chaînes sans fin 210, qui sont intercalées entre les rouleaux 110 et qui sont alignées verticalement de manière à former ladite deuxième surface de convoyage.

Le deuxième convoyeur 2 comporte en outre un moteur électrique 22, qui est monté sur le châssis 10 du premier convoyeur 12 et qui est couplé de manière usuelle aux chaînes sans fin 210, afin de permettre leur entraînement en rotation dans le sens de convoyage Y1 ou dans l'autre sens de convoyage Y2.

Le deuxième convoyeur 2 est assemblé avec le premier convoyeur 1 et est mobile verticalement entre une position basse (Figure 2) dans laquelle la surface de transport des chaînes 210 est positionnée au-dessous de la surface de transport des rouleaux 110 du premier convoyeur et une position haute (Figure 3) dans laquelle la surface de transport des chaînes 210 est positionnée au-dessus de la surface de transport des rouleaux 110 du premier convoyeur 1.

En référence à la figure 2, le premier convoyeur 1 et le deuxième convoyeur 2 sont de manière avantageuse agencés l'un par rapport à l'autre de telle sorte que le deuxième convoyeur 2 occupe le même espace en hauteur que le premier convoyeur 1 lorsque le deuxième convoyeur est en position basse, ce qui permet d'améliorer fortement la compacité en hauteur du dispositif transfert.

Plus particulièrement, en référence aux figures 1, 2 et 4, le châssis 10 du premier convoyeur 1 comporte une face inférieure 100 qui est plane et définit un plan de base B. Cette face inférieure 100 constitue la base du châssis 10 et peut avantageusement être posée en contact avec le sol.

Le châssis 20 du deuxième convoyeur 2 est positionné au-dessus de cette base 100 du châssis 10 du premier convoyeur.

Plus particulièrement, en référence à la figure 2, le châssis 20 du deuxième convoyeur 2 est emboîté verticalement avec le châssis 10 du premier convoyeur 1, tout en étant mobile verticalement par rapport au châssis 10 du premier convoyeur 1, et de préférence de telle sorte que les deux convoyeurs 1 et 2 occupent le même espace en hauteur lorsque le deuxième convoyeur 2 est en position basse.

L'invention n'est pas limitée à la mise en oeuvre d'un convoyeur 1 à rouleaux 110 et d'un convoyeur 2 à chaînes 210, d'autres éléments de convoyage mobiles pouvant être envisagés, tels que par exemple des galets rotatifs, l'important étant que les éléments de convoyage 11, 21 des deux convoyeurs soient imbriqués et permettent de supporter et transporter une charge dans des directions de convoyage X et Y qui sont transversales, et de préférence perpendiculaires.

Par ailleurs, dans une autre variante de réalisation, le convoyeur 2 peut être fixe, tandis que le convoyeur 1 est mobile verticalement et peut être actionné entre une position basse et une position haute. Dans une autre variante, les deux convoyeurs 1 et 2 peuvent être mobiles verticalement par rapport à un bâti porteur et actionnables chacun entre une position basse et une position haute.

### Système monte et baisse 3

Le système monte et baisse 3 du dispositif transfert T est avantageusement intégralement positionné au-dessus de la base 100 du châssis 10 du premier convoyeur.

Ce système monte et baisse 3 du dispositif transfert T comporte plusieurs colonnes 30 réglables, qui sont positionnées sous et supportent le deuxième convoyeur 2, et un actionneur 31 qui est couplé aux colonnes 30 réglables.

Plus particulièrement, dans l'exemple illustré, le châssis 10 du premier convoyeur 1 fait office de bâti porteur et chaque colonne 30 réglable est montée entre les deux châssis 10 et 20 des convoyeurs 1 et 2 et permet de supporter le deuxième convoyeur 2 sur le châssis 10 du premier convoyeur 1 en étant positionnée entièrement au-dessus de la base 100 du châssis 10.

Chaque colonne 30 réglable fait en outre office d'entretoise réglable permettant de régler l'écartement vertical entre les deux châssis 10 et 20, entre une valeur minimale correspondant à la position basse susvisée et une valeur maximale correspondant à la position haute susvisée.

Dans l'exemple préféré de réalisation illustré sur les figures, le dispositif transfert T comporte quatre colonnes réglables 30, qui sont positionnées aux sommets d'un quadrilatère, de manière à obtenir une bonne répartition de la charge et une bonne stabilité. Ce nombre particulier de colonnes réglables 30 n'est pas limitatif de l'invention. Le dispositif transfert T peut plus généralement comporter une seule colonne réglable centrale, ou deux colonnes réglables ou n (n>2) colonnes réglables de préférence positionnées aux sommets d'un polygone à n côtés, par exemple trois colonnes réglables positionnées aux sommets d'un triangle, cinq colonnes réglables positionnées aux sommets d'un pentagone, ...

Un exemple préféré de structure de colonne réglable 30 va à présent être détaillé en référence aux figures 1, 4 à 7.

### Exemples de réalisation des colonnes 30 réglables du système monte et baisse 3

Dans cet exemple préféré, chaque colonne réglable 30 comporte (Figure 4) une pièce de guidage 300, un roulement 301 en forme de couronne, un ensemble came 302, et un suiveur de came 303.

La pièce de guidage 300 comporte un tube de guidage 300a cylindrique prolongé par une collerette 300b à fonction d'embase de fixation.

Le tube de guidage 300a comporte deux encoches de guidage axial 300c, qui sont réalisées dans son bord supérieur, et qui sont diamétralement opposées et symétriques l'une de l'autre par rapport à l'axe central du tube 300a.

La pièce de guidage 300 est positionnée au-dessus du plan de base B du châssis 10, en étant fixée (Figure 4) au châssis 10 du premier convoyeur 1, par exemple en soudant la collerette 300b à ce châssis, de telle sorte que l'axe central du tube de guidage 300a soit vertical. Cet axe central du tube de guidage 300a définit l'axe de rotation A de l'ensemble came 302.

Le roulement 301 en forme de couronne est par exemple un roulement à rouleaux de type butée à aiguilles. Ce roulement 301 est enfilée coaxialement sur le tube de guidage 300a et est posée sur le châssis 10, de manière à former un palier de roulement pour l'ensemble came 302.

Dans cet exemple préféré de réalisation, l'ensemble came 302 est constitué d'un assemblage de deux pièces : une bague cylindrique 3020, dont la face interne a une section circulaire, et une pièce cylindrique 3021 à fonction de came.

Plus particulièrement, la came 3021 est emboîtée coaxialement et avec serrage sur la bague cylindrique 3020.

La bague cylindrique 3020 de l'ensemble came 302 est enfilée coaxialement sur le tube de guidage 300a au-dessus de la butée à aiguilles 301 et est supportée par la butée à aiguilles 301.

L'ensemble came 302 (bague 3020/came 3021) est ainsi mobile en rotation autour de son axe central A par rapport au châssis 10 du convoyeur 1, en étant guidé par la face externe à section circulaire du tube de guidage 300a, une lubrification étant de préférence prévue entre le tube de guidage 300a et la bague 3020. La butée à aiguilles 301 permet un contact roulant en rotation entre l'ensemble came 302 et le châssis 10.

La face supérieure de la came 3021 forme un chemin de came 3022 centré sur l'axe de rotation central A de la came 3021.

Le suiveur de came 303 comporte une pièce cylindrique 3030, sur laquelle sont montés deux galets suiveurs 3031, qui sont chacun montés sur un arbre fixe 3032, et sont diamétralement opposés et symétriques l'un de l'autre par rapport à l'axe de rotation A de la came 3021. Chaque galet suiveur 3031 est rotatif autour d'un axe de rotation A1 (Figure 4).

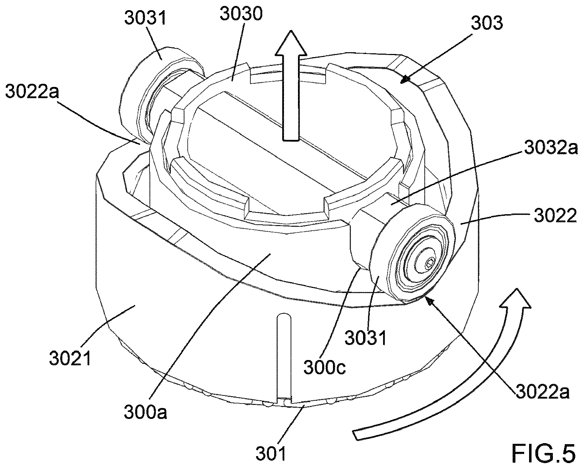

En référence à la figure 5, la pièce cylindrique 3030 est insérée coaxialement à l'intérieur du tube de guidage 300a, en étant orientée en rotation par rapport au tube de guidage 300a, de telle sorte que les deux extrémités de l'axe 3032, qui supportent les galets rotatifs 3031, sont positionnées dans les encoches 300c du tube 300a, les deux galets suiveurs 3031 étant supportés par le chemin de came 3022 de la came 3021 et étant en contact roulant avec le chemin de came 3022.

Dans une autre variante de réalisation, la pièce cylindrique 3030 peut également être conçue de manière à être enfilée coaxialement sur le tube de guidage 300a en étant orientée en rotation par rapport au tube de guidage 300a, de telle sorte que les deux extrémités de l'axe 3032, qui supportent les galets rotatifs 3031, sont positionnées dans les encoches 300c du tube 300a, les deux galets suiveurs 3031 étant supportés par le chemin de came 3022 de la came 3021 et étant en contact roulant avec le chemin de came 3022.

En référence à la figure 4, le bord supérieur de la pièce cylindrique 3030 est crénelé, de manière à comporter plusieurs dents 3033, qui sont réparties sur sa circonférence, et qui sont prévues pour venir s'insérer à travers des ouvertures traversantes 201 (Figure 1) correspondantes du châssis 20 du convoyeur 2. Ainsi, le châssis 20 du convoyeur 2 peut être facilement et rapidement assemblé avec le châssis 10 du convoyeur 1, en étant simplement posé et emboîté de manière amovible sur les suiveurs de came 303 des colonnes réglables 30, ce qui simplifie avantageusement les opérations d'assemblage ou de désassemblage des deux convoyeurs 1 et 2.

Dans une autre variante, le châssis 20 du convoyeur 2, peut être fixé au suiveur de came de chaque colonne réglable par tout moyen de liaison mécanique connu (boulons, vis, ...), de préférence de manière démontable.

Le chemin de came 3022 de chaque came 3021 présente d'une manière générale un profil qui est adapté de telle sorte que la rotation de la came 3021, autour de son axe A, permet de déplacer axialement le suiveur de came 303 vers le haut, et par là-même le deuxième convoyeur 2, jusqu'à une position haute correspondant à la position haute susvisée (Figure 3) du deuxième convoyeur 2 et de déplacer axialement le suiveur de came 303 vers le bas, par là-même le deuxième convoyeur 2, jusqu'à une position basse correspondant à la position basse susvisée (Figure 2) du deuxième convoyeur 2.

Dans cet exemple préféré de réalisation, ce chemin de came 3022 s'étend sur 360° autour de cet axe de rotation A et est symétrique par rapport à cet axe de rotation A.

Plus particulièrement, ce chemin de came 3022 définit (Figure 5) deux portions hautes 3022a, qui sont diamétralement opposées et symétriques l'une de l'autre par rapport à l'axe de rotation A et deux portions basses 3022b, qui sont diamétralement opposées et symétriques l'une de l'autre par rapport à l'axe de rotation A.

On a représenté sur la figure 5, une colonne 30 dont le suiveur de came 303 est en position basse, les galets suiveurs 3031 étant en contact avec les deux portions basses 3022b du chemin de came 3022.

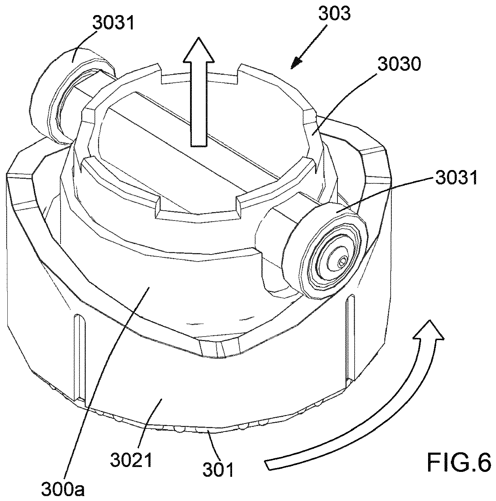

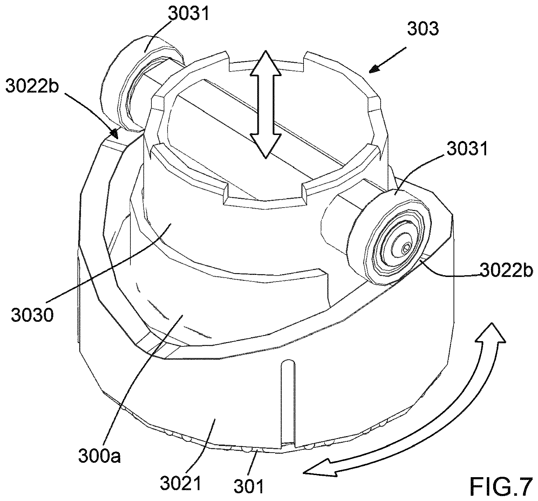

En référence à la figure 6, la rotation de la came 3021 autour de son axe de rotation vertical A permet de faire monter verticalement le suiveur de came 303 jusqu'à sa position haute de la figure 7, dans laquelle les galets suiveurs 3031 sont en contact avec les deux portions hautes 3022b du chemin de came 3022.

Ensuite pour amener de nouveau le suiveur de came en position basse, il suffit de poursuivre la rotation de la came 3021 dans le même sens de rotation ou de mettre en rotation la came 3021 dans le sens de rotation contraire.

Au cours de son mouvement monte et baisse, le suiveur de came 303 est bloqué en rotation et est guidé axialement en translation par les encoches 300c du tube de guidage 300a et les galets suiveurs 3031 permettent un contact roulant entre la came 3021 rotative et le suiveur de came 303.

Dans une autre variante, la came 3021 et le suiveur de came 303 peuvent être conçus de manière à permettre un contact glissant entre le chemin de came 3022 et le suiveur de came 303.

L'invention n'est pas limitée à la mise en oeuvre d'une came 3021 mobile en rotation associée à un suiveur de came 303 ayant uniquement un degré de liberté en translation verticale. Dans une autre variante de réalisation, le suiveur de came 303 peut à l'inverse être mobile en rotation et être actionnable en rotation par un système monte et baisse et la came peut être fixe.

Dans une autre variante de réalisation, le chemin de came peut être orienté vers le bas et être posé sur le suiveur de came et le mouvement de monte et baisse étant transmis à la came du fait de sa rotation ou de la rotation du suiveur de came.

### Exemples d'actionneur 31 du système monte et baisse 3

L'actionneur 31 du système monte et baisse 3 est couplé à toute les cames 3021 des colonnes réglables 30 et permet d'actionner simultanément en rotation les cames 3021 de toutes les colonnes réglables 30 autour de leur axe de rotation vertical A, de manière à réaliser le mouvement monte et baisse du deuxième convoyeur 20.

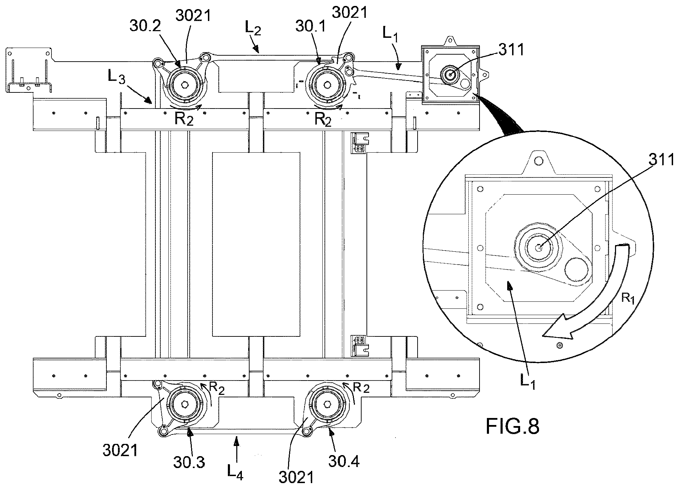

Cet actionneur 31 comporte un moteur électrique 310, qui est monté sur le châssis 10 du premier convoyeur 1, et dont l'arbre moteur vertical 311 (Figure 8) est couplé aux cames 3021 rotatives par des moyens de liaison permettant l'entraînement simultanément en rotation des cames 3021 dans le même sens de rotation.

Plus particulièrement, en référence à la figure 8, l'arbre moteur 311 du moteur électrique 310 est couplé à la came 3021 d'une première colonne réglable 30.1 la plus proche, au moyen d'une première liaison bielle-manivelle L1. La came 3021 de cette première colonne réglable 30.1 est couplée à la came 3021 d'une deuxième colonne réglable 30.2, au moyen d'une deuxième liaison bielle-manivelle L2. La came 3021 de cette deuxième colonne réglable 30.2 est couplée à la came 3021 d'une troisième colonne réglable 30.3, au moyen d'une troisième liaison bielle-manivelle L3. La came 3021 de cette troisième colonne réglable 30.3 est couplée à la came 3021 d'une quatrième colonne réglable 30.4, au moyen d'une quatrième liaison bielle-manivelle L4.

Sur la figure 8, les cames 3021 des colonnes 30.1 à 30.4 sont en position basse. La rotation de l'arbre moteur 311 dans un sens de rotation R1 est transmise à toutes les cames 3021 des colonnes 30.1 à 30.4 par les liaisons bielle-manivelle L1 à L4, qui permettent de mettre en rotation toutes les cames 3021 dans le même sens de rotation R2, qui est opposé au sens de rotation R1 de l'arbre moteur.

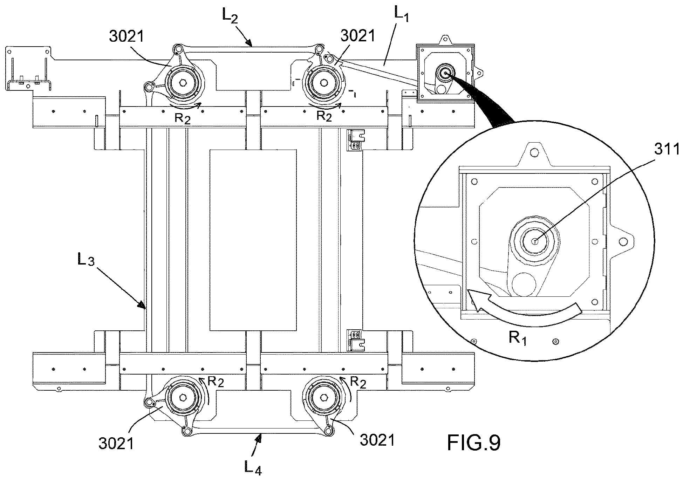

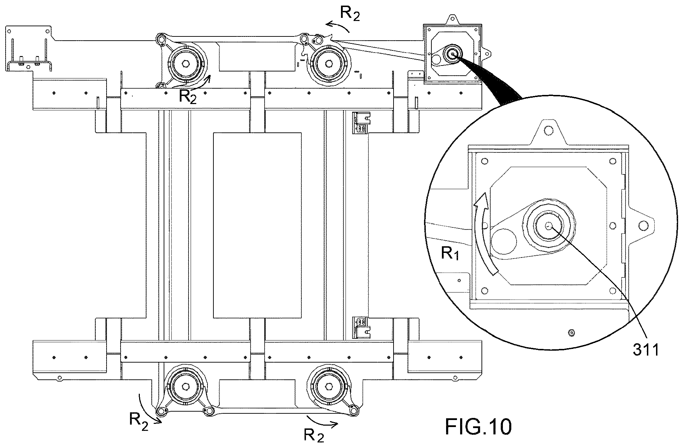

La rotation de l'arbre moteur 311 dans le sens de rotation R1 (Figures 8, 9 et 10) permet ainsi d'obtenir simultanément la descente des suiveurs de came 303 jusqu'à la position basse de la figure 10, ce qui correspond au mouvement d'abaissement du deuxième convoyeur 2 depuis sa position haute jusqu'à sa position basse.

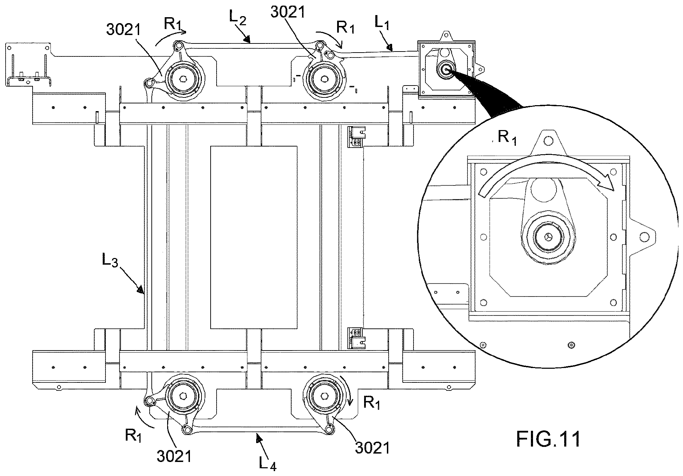

En référence à la figure 11, en poursuivant la rotation de l'arbre moteur 311 dans le même sens de rotation R1, cette rotation de l'arbre moteur 311 est transmise à toutes les cames 3021 des colonnes 30.1 à 30.4 par les liaisons bielle-manivelle L1 à L4, de telle sorte que toutes les cames 3021 sont mise en rotation dans le même sens de rotation R1 que l'arbre moteur 311. On obtient ainsi simultanément la montée des suiveurs de came 303 jusqu'à la position haute de la figure 8, ce qui correspond au mouvement de montée du deuxième convoyeur 2 depuis sa position basse jusqu'à sa position haute.

Bien que la mise en oeuvre de liaisons mécaniques articulées de type bielle-manivelle soit préférée, l'invention n'est pas limitée à ce type particulier de liaison mécanique. De manière non exhaustive, l'actionneur 31 peut être réalisé en mettant en oeuvre des liaisons de type pignon/chaîne ou de type pignon/crémaillère ou de type pignon/vis sans fin.

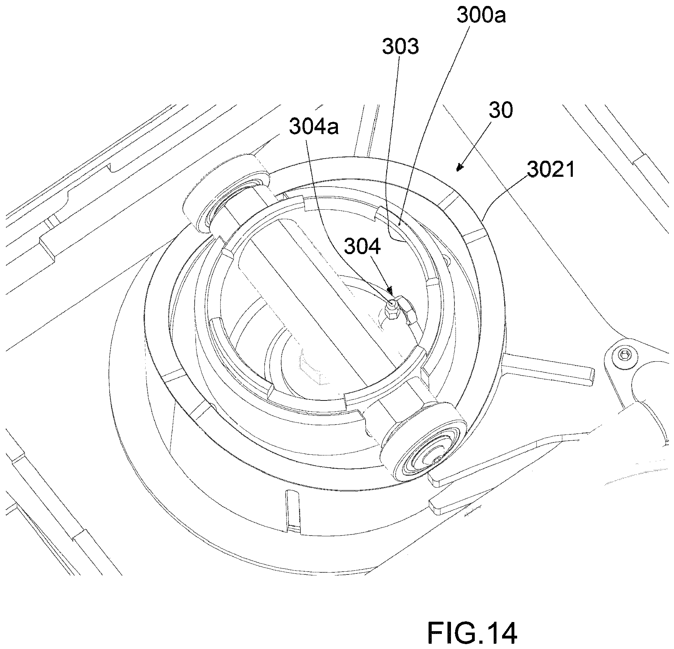

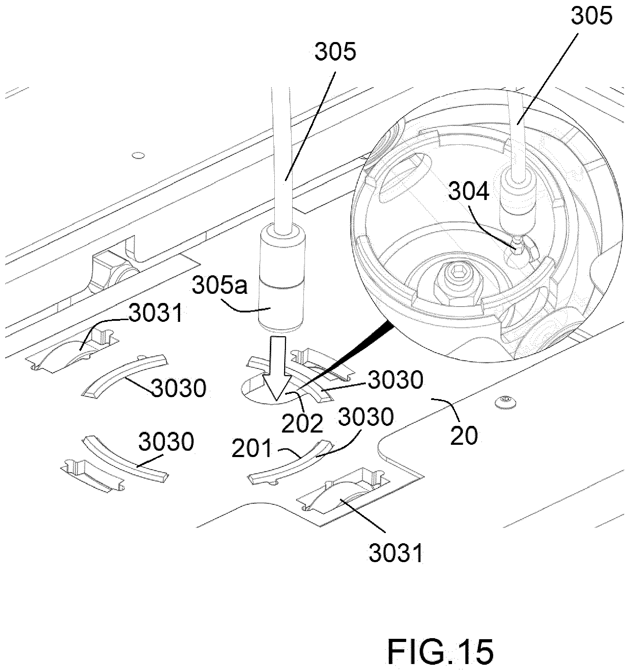

En référence aux figures 14 et 15, le dispositif transfert peut également comporter les perfectionnements additionnels et optionnels suivants.

### Lubrification

En référence à la figure 14, la colonne réglable 30 a été améliorée en y intégrant une buse de lubrification 304 qui est adaptée pour introduire un lubrifiant liquide dans l'espace (interstice) entre le suiveur de came 303 et le tube de guidage 300a.

Plus particulièrement la buse de lubrification 304 est fixée au suiveur de came 303, traverse le suiveur de came 303 et débouche dans l'espace entre le suiveur de came 303 et le tube de guidage 300a. La buse de lubrification 304 comporte une admission pour le lubrifiant qui est positionnée à l'intérieur du suiveur de came 303.

Lorsque le lubrifiant est introduit localement et avec une légère pression dans l'interstice entre le suiveur de came 303 et le tube de guidage 300a, il remplit au départ l'interstice entre le suiveur de came 303 et le tube de guidage 300a sur une faible hauteur et sur toute la périphérie du tube de guidage 300a. Ensuite le mouvement monte-et baisse du suiveur de came 303 permet de lubrifier sur une plus grande hauteur l'interstice entre le suiveur de came 303 et le tube de guidage 300a.

De préférence, en référence à la figure 15, le châssis 20 du deuxième convoyeur 2 comporte, pour chaque colonne réglable 30, une ouverture traversante 202 permettant d'accéder à l'admission 304a de la buse de lubrification 304 et plus particulièrement de faire passer et raccorder la tubulure 305 d'alimentation en lubrifiant avec l'admission 304a de la buse de lubrification 304.

Cette tubulure 305 est équipée à une extrémité d'un embout 305a qui est adapté pour être facilement raccordé, de préférence de manière amovible, sur la buse de lubrification 304, et de préférence pour être emboîté sur la buse de lubrification 304, de manière à pouvoir alimenter la buse 304 avec un lubrifiant. L'autre extrémité de la tubulure 305 est raccordée à une source de lubrifiant d'un dispositif de lubrification. La lubrification du dispositif transfert T au moyen de ce dispositif de lubrification peut ainsi avantageusement être effectuée facilement lors d'une opération de maintenance, sans devoir démonter le dispositif transfert.

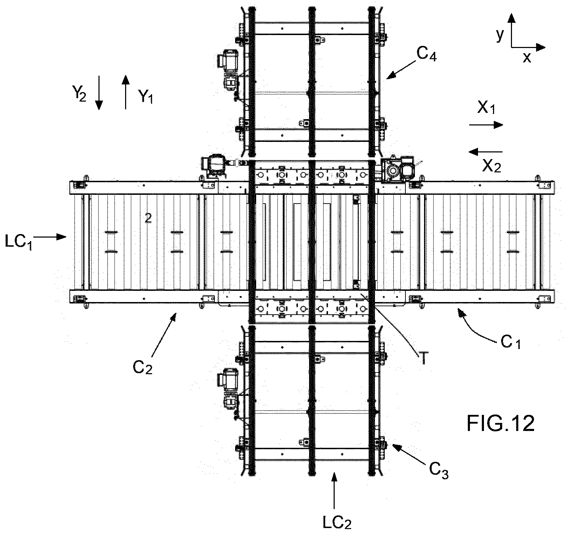

### Exemple de mise en oeuvre dans une ligne de convoyage - Figure 12

On a représenté sur la figure 12, en vue de dessus, un exemple d'installation de convoyage à quatre voies comportant le dispositif de transfert T précédemment décrit.

Cette installation de convoyage comporte deux convoyeurs à rouleaux C1 et C2 entre lesquels est monté le dispositif de transfert T, de telle sorte que les convoyeurs à rouleaux C1 et C2 sont juxtaposés et alignés avec le premier convoyeur 1 à rouleaux du dispositif transfert T dans la première direction de convoyage X et forme un première ligne de convoyage LC1.

Lorsque le deuxième convoyeur 2 du dispositif transfert T est en position basse, cette première ligne de convoyage LC1 permet de transporter une palette P (figure 13), vide ou chargée de produits, dans la direction de convoyage X, dans un sens X1 ou dans l'autre sens X2 de convoyage, en fonction du sens de rotation des rouleaux.

Cette installation de convoyage comporte également deux convoyeurs à chaînes C3 et C4 orientés à 90° par rapport aux convoyeurs à rouleaux C1 et C2, et montés de part et d'autre du deuxième convoyeur 2 à chaînes. Les convoyeurs à chaînes C3 et C4 sont juxtaposés et alignés avec le deuxième convoyeur 2 à chaines du dispositif transfert T, dans sa position haute, de manière à former une deuxième ligne de convoyage LC2, perpendiculaire à la première ligne de convoyage LC1.

Lorsque le deuxième convoyeur 2 du dispositif transfert T est en position haute, cette deuxième ligne de convoyage LC2 permet de transporter une palette P (figure 13), vide ou chargée de produits, dans la direction de convoyage Y, dans un sens Y1 ou dans l'autre sens Y2 de convoyage, en fonction du sens de rotation des chaînes.

Le moteur 310 du système monte et baisse 3 du dispositif transfert T est piloté par un automate programmable industriel, de manière à lever automatiquement en position haute, ou à abaisser automatiquement en position basse, le deuxième convoyeur 2, en fonction du trajet que doit suivre une palette P transportée sur l'une ou l'autre des lignes de convoyage LC1, LC2.

En particulier lorsqu'une palette P, vide ou chargée, est transportée sur la ligne de convoyage LC1 (le convoyeur 2 étant en position basse), et doit être transférée à 90° sur l'autre ligne de convoyage LC2, ledit automate est programmé pour détecter la présence de la palette P sur le dispositif transfert T au moyen d'au moins un capteur de présence monté sur le dispositif transfert T, et lorsque la présence d'une palette P est détectée, ledit automate :
- commande automatiquement l'arrêt des rouleaux 110 du premier convoyeur 1,
- commande le moteur 310 du système monte et baisse 3, de manière à lever le deuxième convoyeur 2 en position haute,
- commande le moteur 22 pour entraîner les chaînes 210 du deuxième convoyeur 2 dans le sens de convoyage (Y1 ou Y2) souhaité, la palette P étant ainsi transférée automatiquement à 90° sur le convoyeur C4 ou C3.

A l'inverse, lorsqu'une palette P, vide ou chargée, est transportée sur la ligne de convoyage LC2 (le convoyeur 2 étant en position haute), et doit être transférée à 90° sur l'autre ligne de convoyage LC1, ledit automate est programmé pour détecter la présence de la palette P sur le dispositif transfert T au moyen d'au moins un capteur de présence monté sur le dispositif transfert T, et lorsque la présence d'une palette P est détectée, ledit automate :
- commande automatiquement l'arrêt des chaînes 210 du deuxième convoyeur 2,
- commande le moteur 310 du système monte et baisse 3, de manière à abaisser le deuxième convoyeur 2 en position basse,
- commande les moteurs des rouleaux 110 du premier convoyeur 2 dans le sens de convoyage (X1 ou X2) souhaité, la palette P étant ainsi transférée automatiquement à 90° sur le convoyeur C1 ou C2.

L'installation de convoyage peut comporter une seule ligne de convoyage, par exemple la ligne LC1. Dans ce cas le dispositif transfert T est utilisé pour éjecter latéralement de cette ligne de convoyage une palette transportée sur cette ligne de convoyage jusqu'au dispositif de transfert T.

Le dispositif de transfert T peut avantageusement être posé directement sur le sol, en posant la base 100 du châssis 10 du premier convoyeur 1 en contact avec le sol, et peut être fixé au sol par exemple en boulonnant le châssis 10 du dispositif transfert T sur un sol plat. Le dispositif de transfert T peut néanmoins également être plus ou moins surélevé par rapport au sol en montant le châssis 10 du premier convoyeur 1 sur des pieds.

Le système monte et baisse 3 de l'invention permet avantageusement d'obtenir une très bonne compacité en hauteur des deux convoyeurs 1 et 2 imbriqués.

En particulier et de préférence, grâce à cette compacité, dans une variante préférée de réalisation, il a été possible de réaliser un dispositif transfert dont la hauteur H (Figure 1) entre la base 100 du châssis 10 du premier convoyeur 1 et la surface porteuse (sommets des rouleaux 110) du premier convoyeur 1 est faible et de l'ordre de 90 mm +/-10mm.

Lorsque le châssis 10 du dispositif transfert T est posé directement sur le sol, cette faible hauteur permet de charger les palettes P à transporter dans l'installation de transport au moyen d'un simple transpalette manuel à faible course de levage.

Le système monte et baisse 3 de l'invention présente également l'avantage d'être robuste et de permettre la mise en oeuvre d'une force de levage importante.

A titre d'exemple, dans une variante préférée de réalisation, il a été possible de réaliser un dispositif transfert T permettant de transférer des palettes P chargées de produits et pouvant par exemple peser au moins jusque 1000 kg.

Le système monte et baisse 3, qui a été décrit en référence aux figures annexées, et qui comporte une ou plusieurs colonnes réglables 30 comprenant chacune un tube de guidage 300a fixe permettant à la fois un blocage en rotation du suiveur de came et un guidage en translation vers le haut et vers le bas du suiveur de came, peut également être utilisé dans d'autres applications en dehors du domaine des dispositifs transferts à convoyeurs transversaux et imbriqués. Ce système monte et baisse particulier peut être utilisé pour lever ou abaisser tout type de support ou de charge, et par exemple pour lever ou abaisser un support qui de manière non exhaustive peut être un plateau, une plateforme ou un convoyeur.

## Revendications

1. Dispositif transfert (T) comportant un premier convoyeur **(1)** et un deuxième convoyeur (2) qui sont transversaux et imbriqués, au moins le deuxième convoyeur (2) étant mobile verticalement, et un système monte et baisse (3) qui permet de lever et abaisser au moins ledit deuxième convoyeur (2) entre une position haute et une position basse, de manière à permettre un transfert entre les deux convoyeurs (1 ; 2 ) avec un changement de la direction de convoyage, **caractérisé en ce que** le système monte et baisse (3) comporte au moins une colonne (30) réglable, qui est positionnée sous et supporte ledit deuxième convoyeur (2) et qui comporte une came (3021) et un suiveur de came (303), la came ou le suiveur de came étant rotatif autour d'un axe de rotation vertical (A), la came comprenant un chemin de came (3022) centré sur cet axe de rotation vertical (A), et le suiveur de came (303) étant adapté pour coopérer avec ledit chemin de came (3022), de sorte que la rotation de la came (3021) ou du suiveur de came (303) autour de cet axe de rotation vertical (A) permet ledit mouvement monte et baisse du deuxième convoyeur (2), et **en ce que** le système monte et baisse (3) comporte un actionneur (31) permettant d'actionner en rotation la came (3021) ou le suiveur de came (303) autour de cet axe de rotation vertical (A).

2. Dispositif transfert selon la revendication 1, dans lequel le système monte et baisse (3) comporte plusieurs colonnes (30) réglables, qui sont positionnées sous et supportent ledit deuxième convoyeur (2) et qui comportent chacune une came (3021) et un suiveur de came (303), chaque came ou suiveur de came étant rotatif autour d'un axe de rotation vertical (A), chaque came comprenant un chemin de came (3022) centré sur cet axe de rotation vertical (A), et chaque suiveur de came étant adapté pour coopérer avec ledit chemin de came, de sorte que la rotation des cames ou des suiveurs de came autour de leur axe de rotation vertical permet ledit mouvement monte et baisse du convoyeur mobile verticalement, et ledit actionneur (31) du système (3) monte et baisse permet d'actionner simultanément en rotation les cames (3021) ou les suiveurs de came (303) de toutes les colonnes (30) réglables autour de leur axe de rotation vertical (A).

3. Dispositif transfert selon l'une quelconque des revendications précédentes, dans lequel le premier convoyeur (1) et le deuxième convoyeur (2) sont perpendiculaires et permettent un transfert à 90°.

4. Dispositif transfert selon l'une quelconque des revendications précédentes, dans lequel le premier convoyeur (1) et le deuxième convoyeur (2) sont agencés l'un par rapport à l'autre de telle sorte que le deuxième convoyeur (2) occupe le même espace en hauteur que le premier convoyeur (1) lorsque le deuxième convoyeur est en position basse.

5. Dispositif transfert selon l'une quelconque des revendications précédentes, dans lequel le premier convoyeur (1) comporte un châssis (10), sur lequel sont montés des premiers éléments de convoyage (11) qui sont mobiles et forment une première surface de convoyage permettant de supporter et transporter une charge dans une première direction de convoyage (X) et le deuxième convoyeur (2) comporte un châssis (20), sur lequel sont montés des deuxièmes éléments de convoyage (21) qui sont mobiles et forment une deuxième surface de convoyage permettant de supporter et transporter une charge dans une deuxième direction de convoyage (Y) transversale, et de préférence perpendiculaire, à la première direction de convoyage, et dans lequel les premiers éléments de convoyage (11) et les deuxièmes éléments de convoyage (21) sont imbriqués.

6. Dispositif transfert selon la revendication 5, dans lequel le châssis (20) du deuxième convoyeur (2) est emboîté avec le châssis (10) du premier convoyeur, de préférence de telle sorte que les deux convoyeurs (1, 2) occupent le même espace en hauteur lorsque le deuxième convoyeur (2) est en position basse.

7. Dispositif transfert selon l'une quelconque des revendications 5 ou 6, dans lequel le châssis (10) du premier convoyeur (1) comporte une face inférieure, de préférence plane, qui constitue la base (100) du châssis (10) du premier convoyeur (1) et dans lequel le châssis (20) du deuxième convoyeur (2) est positionné au-dessus de cette base (100).

8. Dispositif transfert selon la revendication 7, dans lequel chaque colonne (30) réglable est positionnée au-dessus de la base (100) du châssis (10) du premier convoyeur (1).

9. Dispositif transfert selon la revendication 7, dans lequel le système monte et baisse (3) est intégralement positionné au-dessus de la base (100) du châssis (10) du premier convoyeur (1).

10. Dispositif transfert selon l'une quelconque des revendications 5 à 9, dans lequel le châssis (10) du premier convoyeur (1) est adapté pour être posé en contact avec le sol.

11. Dispositif transfert selon l'une quelconque des revendications 5 à 10, dans lequel chaque colonne (30) réglable est montée entre le châssis (10) du premier convoyeur (1) et le châssis (20) du deuxième convoyeur (2) et fait office d'entretoise réglable permettant le réglage de l'écartement en hauteur entre les deux châssis (10, 20).

12. Dispositif transfert selon l'une quelconque des revendications 5 à 11, dans lequel les premiers éléments de convoyage (11) comportent un ensemble de rouleaux (110) et les deuxièmes éléments de convoyage (21) comportent un ensemble de chaînes (210) intercalées entre les rouleaux ou dans lequel les deuxièmes éléments de convoyage (21) comportent un ensemble de rouleaux et les premiers éléments de convoyage (11) comportent un ensemble de chaînes intercalées entre les rouleaux.

13. Dispositif transfert selon l'une quelconque des revendications 5 à 12, dans lequel la hauteur (H) entre la base (100) du châssis (10) du premier convoyeur (1) et la première surface de convoyage est de 90mm +/-10mm.

14. Dispositif transfert selon l'une quelconque des revendications précédentes, dans lequel chaque came (3021) est mobile en rotation autour de son axe central vertical (A) et le suiveur de came (303) est bloqué en rotation autour de cet axe (A) et est mobile en translation vers le haut et vers le bas.

15. Dispositif transfert selon la revendication 14, dans lequel chaque colonne (30) réglable comporte un tube de guidage (300a) fixe, qui définit l'axe (A) de rotation vertical de la came (3021), dans lequel la came (3021) est enfilée sur le tube de guidage (300a) de sorte que le tube de guidage (300a) permet de guider en rotation la came (3021) autour de cet axe (A), et le suiveur de came (303) est inséré dans le tube de guidage (300a) en étant en contact avec le chemin de came (3022), ou est enfilé sur le tube de guidage en étant en contact avec le chemin de came (3022), de telle sorte que le suiveur de came (303) est bloqué en rotation autour de cet axe (A) par le tube de guidage (300a) et est mobile et guidé en translation vers le haut et vers le bas par le tube de guidage (300a).

16. Dispositif transfert selon la revendication 15, dans lequel le tube de guidage (300a) comporte deux encoches de guidage axial (300c), qui sont diamétralement opposées et symétriques l'une de l'autre par rapport à l'axe de rotation (A) de la came (3021) et qui permettent ledit blocage en rotation du suiveur de came (303) et ledit guidage en translation vers le haut et vers le bas du suiveur de came (303).

17. Dispositif transfert selon l'une quelconque des revendications 15 ou 16, comportant une buse de lubrification (304) adaptée pour introduire un lubrifiant entre le suiveur de came (303) et le tube de guidage (300a).

18. Dispositif transfert selon la revendication 16, dans lequel le châssis (20) du deuxième convoyeur (2) comporte une ouverture traversante (202) permettant d'accéder à l'admission (304a) de la buse de lubrification (304), et plus particulièrement de faire passer et de raccorder une tubulure (305) d'alimentation en lubrifiant à l'admission (304a) de la buse de lubrification (304).

19. Dispositif transfert selon l'une quelconque des revendications 15 à 18, dans lequel le châssis (20) du deuxième convoyeur est posé et emboîté sur le suiveur de came (303) de chaque colonne (30) réglable.

20. Dispositif transfert selon l'une quelconque des revendications précédentes, dans lequel l'actionneur (31) du système monte et baisse comporte un moteur (310), dont l'arbre moteur (311) est couplé en rotation à au moins une colonne (30) réglable au moyen d'une liaison bielle-manivelle (L1), le moteur (310) étant de préférence monté sur le premier convoyeur (1).

21. Dispositif transfert selon la revendication 20, comportant plusieurs colonnes (30) réglables et dans lequel chaque colonne (30) réglable est couplée en rotation à une autre colonne (30) réglable au moyen d'une liaison bielle-manivelle (L2 ; L3 ; L4).

22. Installation de convoyage comportant au moins une ligne de convoyage (LC1) qui comporte au moins un dispositif transfert (T), selon l'une quelconque des revendications 1 à 21, intercalé entre deux convoyeurs (C1, C2) alignés avec le premier convoyeur (1) du dispositif transfert (T) et/ou au moins une ligne de convoyage (LC2) qui comporte au moins un dispositif transfert (T) selon l'une quelconque des revendications 1 à 21, intercalé entre deux convoyeurs (C3, C4) qui sont alignés avec le deuxième convoyeur (2) du dispositif transfert (T) en position haute.

23. Utilisation du dispositif transfert (T) de l'une quelconque des revendications 1 à 21 dans une installation de convoyage, pour transférer dans une deuxième direction de convoyage transversale (Y ou X) une charge, et plus particulièrement une palette (P), qui est transportée dans l'installation de convoyage dans une première direction de convoyage (X ou Y) jusqu'au dispositif transfert (T) ou pour éjecter latéralement une charge, et plus particulièrement une palette (P), qui est transportée dans l'installation de convoyage dans une première direction de convoyage (X ou Y) jusqu'au dispositif transfert (T).
